(19) Europäisches Patentamt
European Patent Office
Office européen des brevets

(11) Veröffentlichungsnummer : **0 424 860 B1**

(12) # EUROPÄISCHE PATENTSCHRIFT

(45) Veröffentlichungstag der Patentschrift : **01.12.93 Patentblatt 93/48**

(51) Int. Cl.$^5$ : **C08G 69/26**, C08G 69/32, C08G 69/36

(21) Anmeldenummer : **90120268.9**

(22) Anmeldetag : **23.10.90**

(54) **Vollaromatische Polyamide, Verfahren zu ihrer Herstellung und daraus geformte Gebilde.**

(30) Priorität : **25.10.89 DE 3935472**

(43) Veröffentlichungstag der Anmeldung : **02.05.91 Patentblatt 91/18**

(45) Bekanntmachung des Hinweises auf die Patenterteilung : **01.12.93 Patentblatt 93/48**

(84) Benannte Vertragsstaaten : **AT BE CH DE DK ES FR GB GR IT LI LU NL SE**

(56) Entgegenhaltungen :
**EP-A- 0 147 766**
**EP-A- 0 199 090**

(73) Patentinhaber : **HOECHST AKTIENGESELLSCHAFT**
**D-65926 Frankfurt (DE)**

(72) Erfinder : **Miess, Georg-Emerich, Dr.**
**Birkenweg 1**
**W-6240 Königstein/Taunus (DE)**
Erfinder : **Klein, Peter, Dr.**
**Fasanenweg 13**
**W-6200 Wiesbaden (DE)**

EP 0 424 860 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft neue, vollaromatische Polyamide des Dicarbonsäure-Diamin-Typs, die aus ihren Lösungen in organischen Lösemitteln versponnen werden können sowie daraus hergestellte geformte Gebilde wie Fäden, Fasern, Faserpulp, Filme, Folien und Membrane mit sehr hohem Anfangsmodul (Elastizitätsmodul) sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Die Herstellung der dafür benötigten Polymere erfolgt am günstigsten in bekannter Weise durch Umsetzung von aromatischen Diaminen mit aromatischen Dicarbonsäuredichloriden in aprotischen organischen Lösungsmitteln vom Amid-Typ (N,N-Dimethylacetamid, N-Methylpyrrolidon, N,N,N',N'-Tetramethylharnstoff und dgl.) - gegebenenfalls in Gegenwart von Calcium- oder Lithiumhalogeniden- und Neutralisation des gebildeten Chlorwasserstoffs, beispielsweise mit Calciumoxid.

Polyaramide mit hoher Festigkeit und hohem Anfangsmodul sind solche, bei denen die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind beispielsweise in der Deutschen Patentschrift 22 19 703 beschrieben.

Dieses Polyamid weist eine Reihe von Vorzügen auf, seine Herstellung und seine Verarbeitung sind jedoch sehr schwierig. Wegen der schlechten Löslichkeit in polaren organischen Lösungsmitteln - und zwar auch in Gegenwart von anorganischen Salzen wie Calciumchlorid oder Lithiumchlorid als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurde beispielsweise in der DE-A-21 44 126 die Herstellung von löslichen aromatischen Polyamiden mit hohem Elastizitätsmodul beschrieben, wonach substituierte 3-(p-Aminophenoxy)-4-aminobenzanilide mit Terephthaloylchlorid gut lösliche Polyamide liefern, welche sich zu Filamenten von guten Festigkeiten und Anfangsmoduli verspinnen und verstrecken lassen.

Die erhöhte Löslichkeit wird hier durch die meta-Orientierung und das Sauerstoffbrückenatom verursacht.

In der Deutschen Patentschrift 25 56 883 und in der Deutschen Offenlegungsschrift 30 07 063 werden Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Nachteilig bei den beiden vorgenannten Verfahren ist, daß die benötigten unsymmetrischen Diamine nur in sehr aufwendigen Verfahren hergestellt und gereinigt werden können.

Aus diesem Grund werden in den DE-A-35 10 655 und 36 05 394,bzw. in EP-A-0 199 090 Terephthalamide mit 3 Diaminkomponenten in bestimmten, definierten Anteilen beschrieben, die in Amid-Lösungsmitteln gut löslich sind und durch Verformung Fäden oder Folien mit sehr guten Festigkeiten und Moduli aber vergleichsweise geringer Reißdehnung liefern.

Der vorliegenden Erfindung liegt daher die Aufgabe zugrunde, solche aromatischen Copolyamide zu finden, die sich unter Verwendung von Amidlösungsmitteln in geformte Gebilde überführen lassen, die sich dann durch eine Reihe von physikalischen Eigenschaften auszeichnen. Bei der Herstellung von Fäden und Fasern soll sich nach entsprechenden Verstreckungsvorgängen insbesondere eine optimale Kombination aus hoher Festigkeit und hoher Reißdehnung einstellen lassen und es sollen vergleichsweise hohe Anfangsmoduli erzielbar sein. Die für die Herstellung der Copolyamide benötigten Monomere sollen leicht zugänglich sein, die durch die Polykondensation erhaltenen Polymerlösungen sollen nach einem Filtrationsprozeß und einer entsprechenden Entgasung direkt spinnbar bzw. formbar sein.

Es gelang, neuartige aromatische Copolyamide zu finden, die überwiegend aus para-substituierten aromatischen Kettenbestandteilen bestehen und überraschenderweise trotzdem in Amid-Lösungsmitteln löslich sind und die sich aus diesen Lösungen zu geformten Gebilden wie Fäden, Fasern, Faserpulp und Folien verarbeiten lassen. Diese Copolyamide weisen zu mindestens 95 Mol-%, vorzugsweise zu 100 Mol-% die folgenden wiederkehrenden - ausschließlich starren - Struktureinheiten:

A : -OC-Ar-CO-

B :

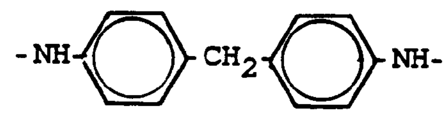

C :

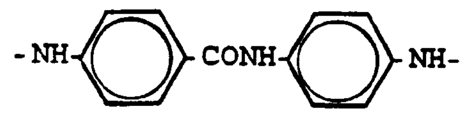

D :

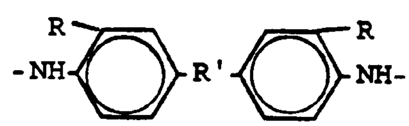

und bis zu 5 Mol-% m-Bindungen enthaltende, von aromatischen Dicarbonsäuren (E') und/oder von aromatischen Diaminen (F') abgeleitete Struktureinheiten E und/oder F auf, wobei die Summe der Molanteile der Struktureinheiten A+E und die Summe der Molanteile der Struktureinheiten B+C+D+F im wesentlichen gleich groß sind.

In diesen Formeln bedeutet -Ar- einen zweiwertigen aromatischen Rest, dessen Valenzbindungen in para- oder vergleichbarer koaxialer oder paralleler Stellung stehen und der durch einen oder zwei inerte Reste, wie Niederalkyl oder Halogen substituiert sein kann und

-R Wasserstoff, niedere Alkylreste, niedere Alkoxyreste oder Halogen.

R' steht für eine direkte Bindung, eine Polymethylenkette mit 2 bis 6 C-Atomen, die unsubstituiert oder durch eine oder zwei Alkyl- oder Alkoxygruppen mit 1 bis 4 C-Atomen substituiert sein kann, für -O-, -S-, -CO- oder $-SO_2-$, oder für eine Gruppe der Formel -O-Ar'-O-, worin Ar' die gleichen Bedeutungen hat wie Ar.

Die Valenzbindungen, die in koaxialer oder paralleler Stellung stehen, sind entgegengesetzt gerichtet. Ein Beispiel für koaxiale, entgegengesetzt gerichtete Bindungen sind die Diphenyl-4,4'-Bindungen. Ein Beispiel für parallele, entgegengesetzt gerichtete Bindungen sind z.B. die Naphthalin-1,5- oder -2,6-Bindungen, während die Naphthalin-1,8-Bindungen parallel gleichgerichtet sind.

Für -Ar- stehende zweiwertige aromatische Reste, bei denen die Valenzbindungen in para- oder vergleichbarer koaxialer oder paralleler Stellung stehen, sind ein- oder zweikernige kondensierte aromatische Reste wie z.B. Phenylen-1,4, Naphthylen-1,4, Naphthylen-1,5, Naphthylen-2,6 und 1,4-Diphenylen.

Bevorzugt für -Ar- ist Phenylen-1,4.

Der Rest -Ar- kann ein- oder zweifach durch Niederalkylreste, das sind geradkettige oder verzweigte Alkylreste mit 1 bis 4 C-Atomen, oder durch Halogen, insbesondere durch F, Cl oder Br substituiert sein. Bevorzugte Alkylsubstituenten sind geradkettig und insbesondere kommen Methyl und Ethyl in Betracht. Bevorzugter Halogensubstituent ist Chlor.

Die erfindungsgemäßen Polyamide können den unsubstituierten Rest -Ar- und die alkyl- und/oder halogensubstituierten Reste -Ar- nebeneinander in wechselnden Anteilen enthalten.

Dabei kann das Polyamid eine Art oder mehrere Arten substituierter Reste -Ar- enthalten; z.B. kann es ausschließlich methylsubstituierte -Ar- Reste oder es kann Anteile von -Ar- Resten mit verschiedenen Alkylsubstituenten und/oder mit Halogensubstituenten enthalten.

Die erfindungsgemäßen Polyamide können aber auch ausschließlich unsubstituierte oder substituierte Reste -Ar- enthalten. Aus Kostengründen sind solche erfindungsgemäßen Polyamide bevorzugt, die nur unsubstituierte oder die bis zu ca. 30 Mol-% substituierte Reste-Ar- enthalten.

Ar' hat die gleichen Bedeutungen wie Ar. Ar und Ar' können aber im Einzelfall gleich oder verschieden sein, d.h. sie können gleiche oder verschiedene der für Ar angegebenen Bedeutungen haben.

Niedere Alkylreste und niedere Alkoxyreste, für die -R stehen können, sind ebenfalls geradkettig oder verzweigt und haben 1-4 C-Atome. Bevorzugt steht R für geradkettige Reste und insbesondere für Reste mit 1-2 C-Atomen. Besonders bevorzugt steht R für Methyl und Methoxy. Bevorzugtes Halogen, für das R steht, ist Chlor.

R' steht vorzugsweise für eine direkte Bindung, einen Ethylen- oder Propylen(1,2)-Rest, -O-, -CO- oder einen Rest der Formel -O-Ar'-O-, worin Ar' Phenyl ist.

Die aus den in das Polyamid einkondensierten Diaminen stammenden Struktureinheiten B, C und D sind in den erfindungsgemäßen aromatischen Polyamiden nur in den folgenden bestimmten Molprozentbereichen, bezogen auf die Gesamtmenge der Komponenten B, C und D, enthalten:
Struktureinheit B: 5-60 Mol-%, vorzugsweise 10-40 Mol-%,
Struktureinheit C: 10-80 Mol-%, vorzugsweise 10-40 Mol-%,
Struktureinheit D: 10-85 Mol-%, vorzugsweise 10-50 Mol-%.

Dabei beziehen sich diese Mol-%-Angaben auf die Gesamtmenge der Diamin-Struktureinheiten B, C und D.

Neben den Struktureinheiten mit paraständigen oder vergleichbaren, koaxial oder parallel entgegengesetzt gerichteten Bindungen können die erfindungsgemäßen Polyamide bis zu 5 Mol-%, bezogen auf alle Struktureinheiten, m-Bindungen enthaltende Struktureinheiten E und F aufweisen.

m-Bindungen enthaltende Struktureinheiten E und F im Sinne der vorliegenden Erfindung sind solche, die einen aromatischen Kern enthalten, dessen in der Kette des Polymermoleküls liegende Bindungen zueinander in m-Stellung stehen.

Solche Struktureinheiten sind z.B. die Reste von Isophthalsäure, m-Phenylendiamin, 3,4'-Diaminodiphenylether oder deren Alkyl- und/oder Alkoxysubstitutionsprodukten, oder 3,4'- oder 3',4-Diaminobenzanilid.

Es ist für den Fachmann selbstverständlich, daß die Summe aller von aromatischen Säuren abgeleiteten Struktureinheiten (A+E) und die Summe aller von aromatischen Aminen abgeleiteten Struktureinheiten (B+C+D+F) im wesentlichen gleich sind, das heißt, daß sie sich maximal um ca. 1 %, vorzugsweise maximal um 0,2 %, unterscheiden, insbesondere im Rahmen der praktischen Meß- und Dosierungsmöglichkeiten gleich sind.

Die erfindungsgemäßen aromatischen Polyamide sind in organischen aprotischen polaren Lösungsmitteln löslich und lassen sich aus diesen Lösungen direkt zu geformten Gebilden verarbeiten.

Die dabei erhaltenen Gebilde zeichnen sich durch eine Kombination sehr guter technologischer Eigenschaften aus. Insbesondere können Filamente hergestellt werden, die sich bei vergleichbaren Festigkeiten durch eine überraschend erhöhte Reißdehnung auszeichnen. Diese in Verbindung mit der Löslichkeit in organischen Lösemitteln und der daraus resultierenden ökonomisch und ökologisch vorteilhaften Verarbeitungsmöglichkeit stellt eine überaus wertvolle Bereicherung der Technik auf dem Gebiet vollaromatischer Polyamide dar.

Die ausgezeichneten technologischen Eigenschaften der erfindungsgemäßen geformten Gebilde beruhen auf dem Einbau der Aminbausteine B, C und D innerhalb der oben angegebenen Grenzen. Wie aus den weiter unten beschriebenen Vergleichsversuchen ersichtlich ist, fallen die technologischen Eigenschaften außerhalb der angegebenen Grenzen stark ab.

Aromatische Polyaramide mit einzelnen der Aminkomponenten B, C und D sind allgemein bekannt.

So wird in der oben zitierten deutschen Offenlegungsschrift Nr. 35 10 655, Vergleichsbeispiel 6, gezeigt, daß ein Terephthalamid von 3,3'-Dimethylbenzidin in Amidlösungsmitteln unlöslich und somit nicht spinnbar ist.

Ebenfalls zitiert ist die Verwendung von 3,3'-Dimethylbenzidin zur Herstellung von Aramiden in folgenden Druckschriften:
DPS 30 07 063, Seite 5, Zeile 25,
Vysokomol. Soed. 12 (1970), Nr. 10, S. 2185,
USP 33 18 849,
Belg. Pat. 569 760,
USP 36 71 542,
USP 37 67 756,
P.W. Morgan: "Condensation Polymers", Intersci. Publ. 1965, Seite 180; Japanische Kokai Tokkyo Koho JP 55/71751(80/71751) zit. CA 93 (16), 151120k und Japanische Kokai JP 50/154522(75/154522) zit. CA 84 (16), 106885s.

Der Einsatz von 3,3'-Dimethoxybenzidin wird beispielsweise beschrieben in
DE-A 19 29 713,

J. Polym. Sci. B2, 369 (1964),
U.S.-PS-36 71 542,
Japanische Kokai Tokkyo Koho JP 55/71751(80/71751) zit. CA 93 (16), 151120k.

Die Verwendung von 4,4'-Diaminobenzanilid zur Herstellung von Polyamiden ist mehrfach beschrieben worden:

a) In USP 36 71 542, Beispiel 31 wird gezeigt, daß das Polyamid aus Terephthaloylchlorid und 4,4'-Diaminobenzanilid in Amidlösungsmitteln schwer löslich ist (vgl. hierzu auch USP 37 67 756, Beispiel 5). Aus Schwefelsäure gesponnene Filamente dieses Polymeren erreichen nur mäßige Festigkeiten und Moduli.

Nach EPA 218 269, Tabelle A und B erreicht ein aus Schwefelsäure gesponnenes Diaminobenzanilidterephthalamid erst nach thermischer Nachbehandlung hohe Festigkeit und hohen Modul. Vergleiche hierzu auch EP-A-168 879.

b) Ebenfalls im USP 36 71 542 wird beschrieben, daß ein Copolyamid aus p-Phenylendiamin + 4,4'-Diaminobenzanilid (1:1) und Terephthaloylchlorid + Dibenzoylchlorid oder 2,6 Naphthaloylchlorid (1:1) in Amidlösungsmitteln innerhalb kurzer Zeit gelartig wird. Die Eigenschaften der Fäden (gesponnen aus Schwefelsäure) sind mäßig.

Erst ein 6-Komponenten-Polymer aus (p-Phenylendiamin + 1,5-Diaminonaphthalin + 4,4'-Diaminobenzanilid) und (Terephthaloylchlorid + 2,6-Naphthaloyldichlorid + Dibenzoylchlorid) ergibt eine homogene Lösung in Amid-Lösungsmitteln. Die Eigenschaften der aus Schwefelsäure gesponnenen Filamente sind mäßig.

c) Nach Preston und Mitarb., Polymer letters 4, 1033 (1966), zitiert auch in DOS 21 44 126, Seite 1, zeigen Filamente aus 4,4'-Diaminobenzanilid-terephthalamid niedrige Festigkeiten und besonders niedrige Moduli.

Vergleiche hierzu auch:
USP 33 54 125, Beispiel 4
J. Polym. Sci 22, 855 (1969)
J. Appl. Polym. Sci 16, 3237 (1972), Seite 3239
J. Macromolek. Sci, Chem. Ed. A7, 325 (1973)
Vysokomol. Soed. Ser. B, 25 (9), 672

d) Die Herstellung von Diaminobenzanilidterephthalamid über die Yamazaki-Reaktion (freie Säure + Diamin + Pyridin + Diphenylphosphit) ergibt nur niedrige Viskositäten: Preston und Mitarb., J. Polym. Sci; Polym. Chem. Ed. 20, 79 (1982).

e) In J. Macromolec. Sci, Chem., A7, 325 (1973) und in Kogyo Kagaku Zassi 1968, 71 (3), 443 werden auch Copolyamide mit 3,4'-Diaminobenzanilid beschrieben.

Wie sich aus den zitierten Schriften ergibt, sind die genannten Polyamide in Amidlösungsmitteln meist sehr schwer löslich und somit auch aus diesen organischen Lösungsmitteln nicht spinnbar. Selbst aus Schwefelsäure gesponnenen Filamente weisen meist nur mäßige Eigenschaften auf.

Dagegen sind die Polyamide der vorliegenden Erfindung, die durch Verwendung von Gemischen der Aminkomponenten B+C+D in den oben angegebenen bestimmten Anteilen hergestellt wurden, überraschenderweise in Amid-Lösungsmitteln löslich, daraus ersponnene Filamente weisen hohe Festigkeit und einen hohen Anfangsmodul auf und die Werte von Bruchdehnung und Festigkeit lassen sich in besonders weiten Grenzen variieren und damit dem beabsichtigten Einsatzzweck optimal anpassen. Während mit bisher bekannten Aramiden Bruchdehnungen von bis zu 3 % bei akzeptablen Festigkeitswerten erreichbar sind, kann mit dem erfindungsgemäßen aromatischen Polyamid ein Bruchdehnungsbereich bis zu 7 % bei vergleichbaren Festigkeitswerten und, bei bevorzugten Festigkeitswerten bis zu 5 %, abgedeckt werden.

Diese Erweiterung des ausnutzbaren Bruchdehnungsbereichs um ca. 60-120 % ist überaus überraschend.

Die Herstellung der erfindungsgemäßen aromatischen Polyamide erfolgt durch Lösungs-Polykondensation von aromatischen Dicarbonsäuredichloriden mit dazu äquivalenten Mengen von Mischungen aus aromatischen Diaminen in bekannten Polyamid-Lösemitteln, d.h. in aprotischen, polaren Lösungsmitteln vom Amidtyp, wie z.B. in N,N-Dimethylacetamid, Tetramethylharnstoff oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegeben werden. Bevorzugte Zusätze sind Calciumchlorid und/oder Lithiumchlorid.

Diese Salzzugabe kann vor der Polykondensation oder vorteilhaft unmittelbar nach der Zugabe des Säurechlorids erfolgen.

Die Polykondensationstemperaturen liegen üblicherweise zwischen -20°C und +120°C, bevorzugt zwischen +10°C und +100°C. Besonders gute Ergebnisse werden bei Reaktionstemperaturen zwischen +10°C und +80°C erzielt. Die Polykondensationsreaktionen werden vorzugsweise so ausgeführt, daß nach Abschluß

der Reaktion 2 bis 15, vorzugsweise 5 bis 10 Gew.-% an Polykondensat in der Lösung vorliegen. Besonders gute Ergebnisse werden bei Konzentrationen von 5,0 bis 7,5 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von ca. 3,2 bis 5,4 dl/g entspricht.

Unter inhärenter Viskosität wird der Ausdruck

$$\eta_{inh} = \frac{\ln \eta_{rel}}{c} \text{ verstanden.}$$

$\eta_{rel}$ bedeutet dabei die relative Viskosität, c die angewandte Konzentration in g/100 ml.

Sie wurde für die Zwecke der vorliegenden Erfindung bestimmt an Lösungen von jeweils 0,5 g Polymer in 100 ml 98-Gew.%iger Schwefelsäure bei 25°C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung. Dieses erfindungsgemäße Verfahren ist dadurch gekennzeichnet, daß man 95 bis 100 Mol-% Säurechloride der Formel

Cl-OC-AR-CO-Cl (A')

und 0 bis 5 Mol-% von m-Bindungen enthaltende Dichloriden aromatischer Dicarbonsäuren (E') mit einer äquivalenten Menge einer Diaminmischung, die sich zusammensetzt aus 95-100 Mol-% eines Gemisches von Diaminen, bestehend aus 5-60 Mol-%, vorzugsweise 10-40 Mol-% Diaminen der Formel

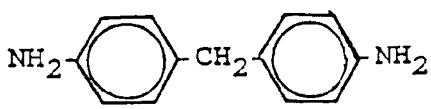

(B')

10-85 Mol-%, vorzugsweise 10-50 Mol-% Diaminen der Formel

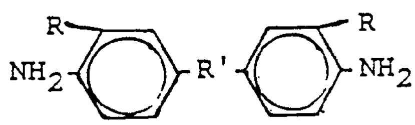

(D')

und 10-80 Mol-%, vorzugsweise 10-40 Mol-% 4,4'-Diaminobenzanilid (C') und aus 0 bis 5 Mol-% von m-Bindungen enthaltenden aromatischen Diaminen (F') in der angegebenen Weise miteinander umsetzt.

Die Carbonsäurechloride der Formel A' leiten sich beispielsweise von folgenden Dicarbonsäuren ab: Terephthalsäure, deren Alkyl-, Alkoxy- oder Halogenderivate wie z.B. Brom- oder Chlorterephthalsäure, 2,5-Dichlorterephthalsäure, Methylterephthalsäure, 2,6-Dimethylterephthalsäure, 2,3-, 2,5 oder 2,6-Dimethoxyterephthalsäure; 1,4-, 1,5- oder 2,6-Naphthalin-dicarbonsäure und deren Alkyl-, Alkoxy oder Halogenderivate wie z.B. 4-Chlor-naphthalin-2,6-dicarbonsäure, 1,5-Dimethoxy-naphthalin-2,6-dicarbonsäure 4,4'-Diphenyl-dicarbonsäure und deren Alkyl-, Alkoxy oder Halogenderivate wie z.B. 3,3'-Dimethyl-diphenyl-4,4'-dicarbonsäure, 2,2'-Dimethoxy-diphenyl-4,4'-dicarbonsäure.

Bevorzugtes Carbonsäurechlorid der Formel A' ist Terephthaloyldichlorid.

Als Diamine der Formel D' kommen beispielsweise die folgenden Verbindungen in Betracht:

a) für R' = eine direkte Bindung:

3,3'-Dimethyl-; 3,3'-Dimethoxy- oder 3,3'-Dichlorbenzidin;

b) für R' = ggf substituierte Polymethylenkette:

1,2-Bis-(4-aminophenyl)-ethan und dessen in 3-Stellung der Phenylkerne alkyl-, halogen- oder alkoxysubstituierte Derivate wie 1,2-Bis-(4-amino-3-methylphenyl)-ethan oder 1,2-Bis-(4-amino-3-methoxyphenyl)-ethan; 2-Methyl-1,2-Bis-(4-aminophenyl)-ethan, 2,3-Bis-(4-aminophenyl)-butan, 1,2-Bis-(4-aminophenyl)-butan, 1,6-Bis-(4-aminophenyl)-hexan, 1,2- oder 3,4-Bis-(4-aminophenyl)-hexan und deren in 3-Stellung der Phenylkerne alkyl-, halogen- oder methoxysubstituierte Derivate, wie z.B. 1,2-Bis-(4-amino-3-chlorphenyl)-butan, 2-Methoxy-1,2-bis-(4-amino-3-methylphenyl)-ethan, 2-Ethoxy-1,2-bis-(4-amino-3-methylphenyl)-ethan;

c) für R' = -O-Ar'-O- :

1,4-Bis-(4-aminophenoxy)-benzol, 1,4-Bis-(4-amino-3-methylphenoxy)-benzol, 1,4-Bis-(4-amino-3-methylphenoxy)-2,5-dimethyl-benzol, 1,4-Bis-(4-amino-3-methoxyphenoxy)-2-methoxybenzol, 1,4-Bis-(4-amino-2-chlorphenoxy)-2,5-dichlorbenzol;

d) für R' = einer der oben genannten Reste -O-, -S-, -CO- oder $-SO_2-$ :

4,4'-Diamino-diphenylether und dessen 3,3'-Dialkyl-, -Dialkoxy- und -Dichlorderivate, z.B. 4,4'-Diamino-3,3'-dimethoxy-diphenylether; 4,4'-Diamino-diphenylsulfid und dessen 3,3'-Dialkyl-, -Dialkoxy- und -Dichlorderivate wie z.B. 4,4-Diamino-3,3'-dimethyl-diphenylsulfid; 4,4'-Diaminobenzophenon und dessen 3,3'-Dialkyl-, -Dialkoxy- und -Dichlorderivate wie z.B. 4,4'-Diamino-3,3'-dimethyl (oder 3,3'-dimethoxy oder 3,3'-dichlor)- benzophenon, 4,4'-Diamino-diphenylsulfon und dessen 3,3'-Dialkyl-, -Dialkoxy- und -Dichlorderivate wie z.B. 4,4'-Diamino-3,3'-dimethyl (oder 3,3'-dimethoxy oder 3,3'-dichlor)-diphenylsulfon.

m-Bindungen enthaltende aromatische Dicarbonsäuredichloride und aromatische Diamine im Sinne der vorliegenden Erfindung sind solche, bei denen die Richtungen der Bindungen der beiden Carbonsäurechloridgruppen bzw. der beiden Aminogruppen miteinander einen Winkel bilden, der dem von m-Bindungen entspricht. Solche Dicarbonsäure-dichloride bzw. Diamine sind z.B. Isophthalsäure-dichlorid, m-Phenylendiamin, 3,4'-Diaminodiphenylether oder deren Alkyl- und/oder Alkoxysubstitutionsprodukte, oder 3,4'- oder 3',4-Diaminobenzanilid.

Bei dieser Arbeitsweise bleiben die erhaltenen erfindungsgeinäßen Polyamide im Lösungsmittel gelöst.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend wird der entstandene und locker an das Amidlösungsmittel gebundene Chlorwasserstoff neutralisiert durch Zugabe basischer Substanzen. Geeignet sind dafür beispielsweise Lithiumhydroxyd, Calciumhydroxyd, insbesondere aber Calciumoxid.

Zur Herstellung von geformten Gebilden aus den erfindungsgemäßen Polyamiden werden die erhaltenen neutralisierten Lösungen der erfindungsgemäßen Polyamide filtriert, entgast und in bekannter Weise zu Fäden, Fasern, Faserpulp, Filmen, Folien oder auch Membranen, die ebenfalls ein Gegenstand der Erfindung sind, weiterverarbeitet. Dies kann beispielweise durch Einsatz einer Naßspinnanlage erfolgen, wo die Polymerlösung durch geeignete Düsen in ein Fällbad ausgepreßt wird, die erhaltenen Fäden durch Waschbäder gezogen und bei höherer Temperatur verstreckt werden. Als Fällbäder eignen sich wäßrige Lösungen des gleichen Amidlösungsmittels, das auch zur Polymerherstellung Verwendung gefunden hat. Es sind aber auch wäßrige Salzlösungen wie z.B. Calciumchloridlösungen verwendbar.

Beim Extrudieren der Polymerlösungen und beim Abzug der geformten Gebilde wie Filamente oder Folien aus dem Fällbad tritt nur eine relativ geringe Naßverstreckung dieser Gebilde ein. Die aus den Fällbädern abgezogenen Gebilde müssen daher nach dem üblichen Waschen und Trocknen einer weiteren Verstreckung unterzogen werden um ihnen die gewünschten mechanischen Eigenschaften, wie hohen Elastizitätsmodul und hohe Reißfestigkeit, zu vermitteln.

Bei der Herstellung der erfindungsgemäßen Fäden und Fasern sowie Folien setzt sich demnach die Gesamtverstreckung zusammen aus einer geringen Naßverstreckung und einer anschließenden höheren Verstreckung. Diese wird in der Regel in üblicher Weise bei erhöhter Temperatur auf Streckwerken ausgeführt, in denen zwischen mit unterschiedlicher Umfangsgeschwindigkeit laufenden Galetten eine ein- oder mehrstufige Verstreckung erfolgt.

Um die Filamente auf die erforderliche Verstrecktemperatur zu erwärmen kann eine Kontaktverstreckung durchgeführt werden, wobei die Filamente über im Streckbereich des Streckwerkes angebrachte heiße Platten ("Bügeleisen") gezogen werden, die Oberflächentemperaturen von 280°C bis 460°C, bevorzugt 340°C bis 450°C aufweisen. Die Filamente werden dabei im Verhältnis 1:4,0 bis ca. 1:15, bevorzugt 1:4 bis 1:12 verstreckt.

Eine ebenfalls geeignete Variante des Spinnverfahrens ist das sog. "Trockendüsen-Naßspinnverfahren", wie es beispielsweise in der US-A-34 14 645 beschrieben ist. Dort wird von oben nach unten gesponnen und die Spinnfäden passieren nach dem Austritt aus der Düse zunächst ein gasförmiges Medium, vorzugsweise Luft, und treten danach in ein wäßriges Koagulationsbad ein. Die weitere Behandlung der so erzeugten Fäden erfolgt wie oben beschrieben. Die aus den erfindungsgemäßen Rohstoffen hergestellten Formkörper, wie z.B. Fasern, Filamente, Faserpulp oder Folien, dienen beispielsweise als Verstärkungsmaterialien für Kunststoffe bzw. als technische Materialien für Filtration und Isolation. Für Isolationszwecke ist es auch möglich, eine Polymerlösung auf den zu isolierenden Körper als Film aufzutragen und dann das Lösungsmittel und gegebenenfalls anwesende Lösungsvermittler zu entfernen.

Zur weiteren Verdeutlichung der Erfindung sollen die nachfolgenden Beispiele dienen. Die Anteile an Dicarbonsäurekomponenten und Diaminkomponenten wurden jeweils zu 100 Mol-% berechnet.

**Beispiel 1**

Aromatisches Copolyamid aus 100 Mol-% Terephthalsäuredichlorid, 50 Mol-% 4,4'-Diaminobenzanilid, 25 Mol-% 4,4'-Diaminodiphenylmethan und 25 Mol-% 1,4-bis-(aminophenoxy)-benzol

45,4 g (0,2 Mol) 4,4'-Diaminobenzanilid, 19,8 g (0,1 Mol) 4,4'-Diaminodiphenylmethan, und 29,2 g (0,1 Mol) 1,4-Bis-(aminophenoxy)-benzol wurden unter Stickstoff in 2100 g N-Methylpyrrolidon gelöst und zwischen 20°C und 60°C innerhalb von 65 Minuten 81,2 g (0,4 Mol) Terephthaloylchlorid zugegeben. Die Lösung wurde bei 68°C nachgerührt und weitere 30 Minuten mit 24,5 g CaO bei 78°C neutralisiert. Die inhärente Viskosität betrug $\eta_{inh}$ = 3,9 dl/g.

Die Lösung wurde filtriert, entgast und naß versponnen. Dazu wurde sie aus einer Düse mit 100 Öffnungen von jeweils 0,1 mm Durchmesser in ein Koagulationsbad, bestehend aus einer 80°C warmen Lösung von 35 % N-Methylpyrrolidon in Wasser mit einer Geschwindigkeit von 16,2 m/Min ausgesponnen. Die erhaltenen Fäden wurden durch zwei Wasserbäder, eine Waschmaschine, über eine Trockengalette und schließlich über ein Bügeleisen der Temperatur von 400°C mit einer Geschwindigkeit von 69,2 m/Min abgezogen.

Der Einzelfilamenttiter betrug 2,22 dtex bei einer Feinheits-Festigkeit von 96 cN/tex, einer Dehnung von 4,5 %, und einem Anfangsmodul von 27 N/tex, bezogen auf 100 % Dehnung.

**Beispiel 2**

Aromatisches Copolyamid aus 100 Mol-% Terephthalsäuredichlorid, 20 Mol-% 4,4'-Diaminodiphenylmethan, 20 Mol-% 4,4'-Diaminobenzanilid und 60 Mol-% 3,3'-Dimethylbenzidin

In der gleichen Weise wie in Beispiel 1 beschrieben, wurden umgesetzt:

15,7 g (0,08 Mol) 4,4'-Diaminodiphenylmethan, 18,2 g (0,08 Mol) 4,4'-Diaminobenzanilid und 50,9 g (0,24 Mol) 3,3'-Dimethylbenzidin in 2100 g N-Methylpyrrolidon mit 81,2 g (0,4 Mol) Terephthaloylchlorid.

Bei Erreichen der gewünschten Viskosität ($\eta_{inh}$ = 4,2 dl/g) wurde die Polykondensation abgestoppt durch Zusatz von 2,2 g Benzoylchlorid und anschließend mit 24,5 g Calciumoxid neutralisiert.

Gesponnen wurde durch eine 30-Loch-Düse mit Lochdurchmesser von 0,1 mm in eine 38 %ige N-Methylpyrrolidonlösung von 80°C. Es wurde gewaschen, getrocknet und bei 380°C auf das 7,8fache verstreckt. Es wurden Fäden mit Einzelfilamenttitern von 1,0 dtex, einer feinheitsbezogenen Festigkeit von 100 cN/tex einer Dehnung von 4,1 % und einem Anfangsmodul von 45 N/tex erhalten.

**Beispiel 3**

Aromatisches Copolyamid aus 100 Mol-% Terephthaloylchlorid, 12,5 Mol-% 3,3'-Dimethoxybenzidin, 37,5 Mol-% 4,4'-Diaminobenzanilid und 50 Mol-% 4,4'-Diaminodiphenylmethan

12,2 g (0,05 Mol) 3,3'-Dimethoxybenzidin, 34,5 g (0,15 Mol) 4,4'-Diaminobenzanilid, 39,6 g (0,2 Mol) 4,4'-Diaminodiphenylmethan wurden in 2100 g N-Methylpyrrolidon gelöst. Zwischen 10°C und 70°C wurden 81,2 g Terephthaloylchlorid zugegeben. Die viskose Lösung ($\eta_{inh}$ = 3,9 dl/g) wurde mit 24,5 g Calciumoxid neutralisiert und dann filtriert und entgast.

Die Lösung wurde nach einem Naßspinnprozess versponnen durch eine Düse mit 100 Löchern von je 0,1 mm Durchmesser in ein Fällbad aus 35 %iger wässriger N-Methylpyrrolidonlösung von 60°C. Nach Wäsche und Trocknung wurden die Fäden auf einem Bügeleisen mit 380°C auf das 7,2-fache verstreckt.

Die Fäden hatten folgende Eigenschaften: Einzelfilamenttiter: 1,7 dtex, Festigkeit 78 cN/tex, Dehnung von 4,7 % und einem Modul von 22 N/tex.

**Beispiel 4**

Aromatisches Copolyamid aus 100 Mol-% Terephthaloylchlorid, 50 Mol-% 4,4'-Diaminodiphenylmethan, 25 Mol-% 4,4'-Diaminobenzanilid und 25 Mol-% 3,3'-Dichlorbenzidin

39,2 g (0,2 Mol) 4,4'-Diaminodiphenylmethan, 22,7 g (0,1 Mol) 4,4'-Diaminobenzanilid, 25,3 g (0,1 Mol) 3,3'-Dichlorbenzidin und 11,1 g Lithiumchlorid wurden im 2100 g N-Methylpyrrolidon gelöst. Zwischen 10°C und 70°C wurden 81,2 g (0,4 Mol) Terephthaloylchlorid zugesetzt. Die viskose ($\eta_{inh}$ = 4,6 dl/g) Lösung wurde mit 24,5 g Calciumoxid (96 %ig) neutralisiert, dann filtriert und entgast.

Die Lösung wurde durch eine 100 Loch-Düse mit Lochdurchmesser von 0,1 mm in ein 35 %iges wäßriges N-Methylpyrrolidon-Fällbad von 80°C versponnen. Die Fäden wurden gewaschen, getrocknet und auf einem Bügeleisen von 400°C auf das 6,1-fache verstreckt. Die Fäden hatten dann Einzelfilamenttitern von 1,99 dtex; eine Festigkeit von 82 cN/tex, eine Dehnung von 5,0 % und einen Modul von 21 N/tex.

**Beispiel 5**

Aromatisches Copolyamid aus 100 Mol-% Terephthalsäuredichlorid, 50 Mol-% 4,4'-Diaminobenzanilid, 15 Mol-% 4,4'-Diaminodiphenylmethan und 35 Mol-% 1,4-Bis-(aminophenoxy)-benzol

45,4 g (0,2 Mol) 4,4'-Diaminobenzanilid, 11,9 g (0,06 Mol) 4,4'-Diaminodiphenylmethan, und 40,9 g (0,14 Mol) 1,4-Bis-(aminophenoxy)-benzol wurden unter Stickstoff in 2100 g N-Methylpyrrolidon gelöst und zwischen 20°C und 60°C innerhalb von 65 Minuten 81,2 g (0,4 Mol) Terephthaloylchlorid zugegeben. Die Lösung wurde bei 68°C nachgerührt und weitere 30 Minuten mit 24,5 g CaO bei 78°C neutralisiert. Die inhärente Viskosität betrug $\eta_{inh}$ = 5,0 dl/g.

Die Lösung wurde filtriert, entgast und naß versponnen. Dazu wurde sie aus einer Düse mit 100 Öffnungen von jeweils 0,1 mm Durchmesser in ein Koagulationsbad, bestehend aus einer 80°C warmen Lösung von 35 % N-Methylpyrrolidon in Wasser mit einer Geschwindigkeit von 16,2 m/Min ausgesponnen. Die erhaltenen Fäden wurden durch zwei Wasserbäder, eine Waschmaschine, über eine Trockengalette und schließlich über ein Bügeleisen der Temperatur von 400°C mit einer Geschwindigkeit von 69,2 m/Min abgezogen.

Die Einzelfilamenttiter betrug 2,22 dtex bei einer Feinheits-Festigkeit von 110 cN/tex, einer Dehnung von 4,0 %, und einem Anfangsmodul von 34 N/tex, bezogen auf 100 % Dehnung.

**Beispiel 6**

Aromatisches Copolyamid aus 100 Mol-% Terephthalsäuredichlorid, 50 Mol-% 4,4'-Diaminodiphenylmethan, 25 Mol-% 4,4'-Diaminobenzanilid und 25 Mol-% 3,3'-Dimethylbenzidin

In der gleichen Weise wie in Beispiel 1 beschrieben, wurden umgesetzt:

39,6 g (0,2 Mol) 4,4'-Diaminodiphenylmethan, 22,7 g (0,1 Mol) 4,4'-Diaminobenzanilid und 21,2 g (0,1 Mol) 3,3'-Dimethylbenzidin in 2100 g N-Methylpyrrolidon mit 81,2 g (0,4 Mol) Terephthaloylchlorid.

Bei Erreichen der gewünschten Viskosität ($\eta_{inh}$ = 4,2 dl/g) wurde die Polykondensation abgestoppt durch Zusatz von 2,2 g Benzoylchlorid und anschließend mit 24,5 g Calciumoxid neutralisiert.

Gesponnen wurde durch eine 30-Loch-Düse mit Lochdurchmesser von 0,1 mm in eine 38 %ige N-Methylpyrrolidonlösung von 80°C. Es wurde gewaschen, getrocknet und bei 380°C auf das 7,8fache verstreckt. Es wurden Fäden mit Einzelfilamenttitern von 1,0 dtex, einer feinheitsbezogenen Festigkeit von 77 cN/tex einer Dehnung von 4,4 % und einem Anfangsmodul von 22 N/tex erhalten.

Die folgenden Vergleichsbeispiele A-E, wurden gemäß den Angaben in der DE-A-3 510 655 durchgeführt. Die Zusammensetzungen der Polymeren und ihre Eigenschaften sind in der folgenden Tabelle angegeben. Die in der Tabelle benutzten Abkürzungen haben die folgenden Bedeutungen:

DADPM : 4,4'-Diamino-diphenylmethan
DMOB : 3,3'-Dimethoxy-benzidin
BAPOB : 1,4-Bis-(aminophenoxy)-benzol
DMB : 3,3'-Dimethylbenzidin
PPD : p-Phenylendiamin
DClB : 3,3'-Dichlorbenzidin

**Tabelle**

| Polymerzusammensetzung [Mol %] : 100 Mol % Terephthaloylchlorid + | | Festigkeit [cN/tex] | Modul [N/tex] | Dehnung [%] |
|---|---|---|---|---|
| DMOB<br>DADPM<br>PPD | 60<br>20<br>20 | 103 | 47 | 2,8 |
| DMOB<br>DADPM<br>PPD | 50<br>25<br>25 | 92 | 43 | 2,9 |
| DClB<br>DADPM<br>PPD | 25<br>25<br>50 | 67 | 35 | 2,7 |
| BAPOB<br>DMB<br>PPD | 40<br>10<br>50 | 95 | | 3,3 |
| BAPOB<br>DMB<br>PPD | 20<br>50<br>30 | 119 | | 2,8 |

## Patentansprüche

### Patentansprüche für folgende Vertragsstaaten : AT, BE, CH, DE, DK, FR, GB, GR, IT, LI, LU, NL, SE

1. Aromatisches Copolyamid, löslich in organischen, aprotischen, polaren Lösungsmitteln vom Amid typ, dadurch gekennzeichnet, daß es zu mindestens 95 Mol% die wiederkehrenden Struktureinheiten der Formeln
A : -OC-Ar-CO-
B :

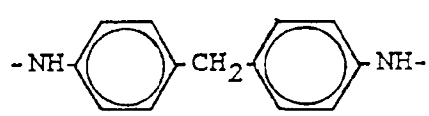

C :

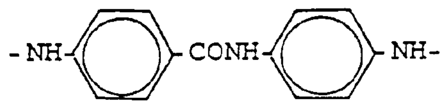

D :

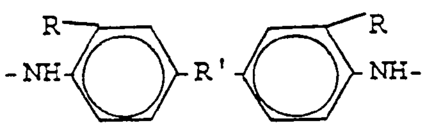

und bis zu 5 Mol% m-Bindungen enthaltende, von aromatischen Dicarbonsäuren (E') und/oder von aromatischen Diaminen (F') abgeleitete Struktureinheiten E und/oder F aufweist, wobei die Summen der Molanteile der Struktureinheiten A+E und der Molanteile der Struktureinheiten B+C+D+F im wesentlichen gleich groß sind,
-Ar- einen zweiwertigen aromatischen Rest bedeutet, dessen Valenzbindungen in para- oder vergleichbarer koaxialer oder paralleler Stellung stehen und der durch einen oder zwei inerte Reste aus der Gruppe Niederalkyl und Halogen substituiert sein kann,
-R Wasserstoff, niedere Alkylreste, niedere Alkoxyreste oder Halogen bedeuten,
R' für eine direkte Bindung, eine Polymethylenkette mit 2 bis 6 C-Atomen, die unsubstituiert oder durch Alkyl- oder Alkoxygruppen mit 1 bis 4 C-Atomen substituiert sein kann, für -O-, -S-, -CO- oder $-SO_2-$, oder für eine Gruppe der Formel -O-Ar'-O-, worin Ar' die gleichen Bedeutungen hat wie Ar, steht
und die Anteile der Diamin-Struktureinheiten B, C und D im Verhältnis zur Gesamtmenge dieser Diamin-Struktureinheiten innerhalb folgender Grenzen liegen:
Struktureinheit B: 5-60 Mol-%,
Struktureinheit C: 10-80 Mol-%,
Struktureinheit D: 10-85 Mol-%.

2. Copolyamide gemäß Anspruch 1, dadurch gekennzeichnet, daß -Ar- 1,4-Phenylen, 1,4-, 1,5- oder 2,6-Naphthylen oder 1,4-Diphenylen ist.

3. Copolyamide gemäß mindestens einem der Ansprüche 1 und 2, dadurch gekennzeichnet, daß -Ar ein 1,4-Phenylenrest ist, der unsubstituiert oder durch einen Niederalkylrest oder ein Halogenatom substituiert ist.

4. Copolyamide gemäß mindestens einem der Ansprüche 1 bis 3, dadurch gekennzeichnet, daß -Ar- ein 1,4-Phenylenrest ist, der unsubstituiert oder durch eine Methylgruppe oder ein Chloratom substituiert ist.

5. Copolyamide gemäß mindestens einem der Ansprüche 1 bis 4, dadurch gekennzeichnet, daß -Ar- ein unsubstituierter 1,4-Phenylenrest ist.

6. Copolyamide gemäß mindestens einem der Ansprüche 1 bis 5, dadurch gekennzeichnet, daß R' eine direkte Bindung, ein Ethylen- oder Propylen(1,2)-Rest, -O-, -CO- oder ein Rest der Formel -O-Ar'-O- ist, worin Ar' Phenyl ist.

7. Copolyamide gemäß mindestens einem der Ansprüche 1 bis 6, dadurch gekennzeichnet, daß -R Methyl, Methoxy oder Chlor ist.

8. Copolyamide gemäß mindestens einem der Ansprüche 1 bis 7, dadurch gekennzeichnet, daß die m-Bindungen enthaltende Struktureinheit der zweiwertige Rest des 3,4'- oder 3',4-Diaminobenzanilids ist.

9. Copolyamide gemäß mindestens einem der Ansprüche 1 bis 8, dadurch gekennzeichnet, daß die Anteile der Diaminkomponenten B, C und D im Verhältnis zur Gesamtmenge an Diaminkomponenten innerhalb folgender Grenzen liegen:

Diamin B: 10-40 Mol-%
Diamin C: 10-40 Mol-%
Diamin D: 10-50 Mol-%

**10.** Verfahren zur Herstellung der aromatische Copolyamide des Anspruchs 1, durch Polykondensation eines Dicarbonsäurechlorids mit aromatischen Diaminen in einem bekannten organischen, aprotischen polaren Lösungsmittel vom Amid typ, gegebenenfalls in Gegenwart eines Alkali- oder Erdalkalihalogenids bei erhöhte Temperatur, dadurch gekennzeichnet, daß man 95 bis 100 Mol% Säurechloride der Formel

Cl-OC-Ar-CO-Cl (A')

und 0 bis 5 Mol-% von m-Bindungen enthaltende aromatische Dicarbonsäure-dichloride (E') mit einer äquivalenten Menge einer Diaminmischung, die sich zusammensetzt aus 95-100 Mol% eines Gemisches von Diaminen, bestehend aus
5-60 Mol% Diaminen der Formel

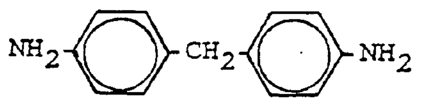
(B')

10-85 Mol-% Diaminen der Formel

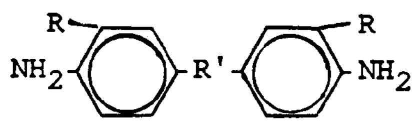
(D')

und 10-80 Mol-% 4,4'-Diamino-benzanilid (C')
und aus 0 bis 5 Mol % von m-Bindungen enthaltenden Diaminen (F') umsetzt.

**11.** Verfahren gemäß Anspruch 10 dadurch gekennzeichnet, daß man ein Gemisch von Diaminen umsetzt, das die folgende Zusammensetzung aufweist:
10-40 Mol% B',
10-40 Mol% C',
10-50 Mol% D'.

**12.** Geformte Gebilde aus der Gruppe der Fäden, Fasern, Faserpulp, Folien und Membrane aus aromatischen Copolyamiden des Dicarbonsäure-Diamin-Typs, dadurch gekennzeichnet, daß das geformte Material ein aromatisches Copolyamid des Anspruchs 1 ist.

**Patentansprüche für folgenden Vertragsstaat : ES**

**1.** Geformte Gebilde aus der Gruppe der Fäden, Fasern, Faserpulp, Folien und Membranen aus aromatischen Copolyamiden des Dicarbonsäure-Diamin-Typs, dadurch gekennzeichnet, daß das geformte Material ein in organischen, aprotischen, polaren Lösungsmitteln vom Amid typ losliches Copolyamid ist, das zu mindestens 95 Mol% die wiederkehrenden Struktureinheiten der Formeln
A : -OC-Ar-CO-
B :

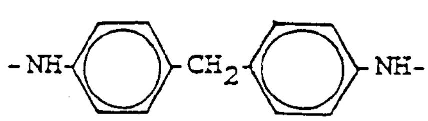

C :

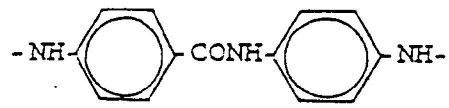

D :

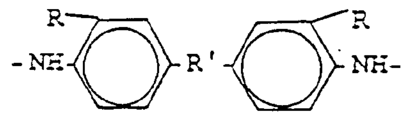

und bis zu 5 Mol% m-Bindungen enthaltende, von aromatischen Dicarbonsäuren (E') und/oder von aromatischen Diaminen (F') abgeleitete Struktureinheiten E und/oder F aufweist, wobei die Summen der Molanteile der Struktureinheiten A+E und der Molanteile der Struktureinheiten B+C+D+F im wesentlichen gleich groß sind,
-Ar- einen zweiwertigen aromatischen Rest bedeutet, dessen Valenzbindungen in para- oder vergleichbarer koaxialer oder paralleler Stellung stehen und der durch einen oder zwei inerte Reste aus der Gruppe Niederalkyl und Halogen substituiert sein kann,
-R Wasserstoff, niedere Alkylreste, niedere Alkoxyreste oder Halogen bedeuten,
R' für eine direkte Bindung, eine Polymethylenkette mit 2 bis 6 C-Atomen, die unsubstituiert oder durch Alkyl- oder Alkoxygruppen mit 1 bis 4 C-Atomen substituiert sein kann, für -O-, -S-, -CO- oder $SO_2$-, oder für eine Gruppe der Formel -O-Ar'-O-, worin Ar' die gleichen Bedeutungen hat wie Ar, steht
und die Anteile der Diamin-Struktureinheiten B, C und D im Verhältnis zur Gesamtmenge dieser Diamin-Struktureinheiten innerhalb folgender Grenzen liegen:
Struktureinheit B: 5-60 Mol-%,
Struktureinheit C: 10-80 Mol-%,
Struktureinheit D: 10-85 Mol-%.

2. Verfahren zur Herstellung der aromatischen Copolyamide des Anspruchs 1, durch Polykondensation eines Dicarbonsäurechlorids mit aromatischen Diaminen in einem bekannten organischen, aprotischen, polaren Lösungsmittel vom Amid typ gegebenenfalls in Gegenwart eines Alkali- oder Erdalkalihalogenids bei erhöhter Temperatur, dadurch gekennzeichnet, daß man 95 bis 100 Mol% Säurechloride der Formel

Cl-OC-Ar-CO-Cl (A')

und 0 bis 5 Mol-% von m-Bindungen enthaltende aromatische Dicarbonsäure-dichloride (E') mit einer äquivalenten Menge einer Diaminmischung, die sich zusammensetzt aus 95-100 Mol% eines Gemisches von Diaminen, bestehend aus
5-60 Mol% Diaminen der Formel

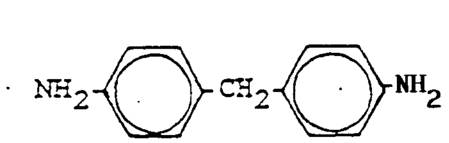

(B')

10-85 Mol-% Diaminen der Formel

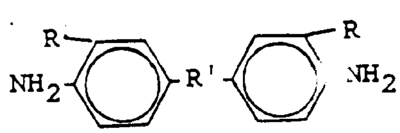

(D')

und 10-80 Mol-% 4,4'-Diamino-benzanilid (C')
und aus 0 bis 5 Mol % von m-Bindungen enthaltenden Diaminen (F') umsetzt.

3. Verfahren gemäß Anspruch 2, dadurch gekennzeichnet, daß man ein Gemisch von Diaminen umsetzt, das die folgende Zusammensetzung aufweist:
10-40 Mol% B',
10-40 Mol% C',
10-50 Mol% D'.

4. Geformte Gebilde gemäß Anspruch 1 oder Verfahren gemäß Anspruch 2, dadurch gekennzeichnet, daß -Ar- 1,4-Phenylen, 1,4-, 1,5- oder 2,6-Naphthylen oder 1,4-Diphenylen ist.

5. Geformte Gebilde gemäß Anspruch 1 oder Verfahren gemäß Anspruch 2, dadurch gekennzeichnet, daß -Ar ein 1,4-Phenylenrest ist, der unsubstituiert oder durch einen Niederalkylrest oder ein Halogenatom substituiert ist.

6. Geformte Gebilde gemäß Anspruch 1 oder Verfahren gemäß Anspruch 2, dadurch gekennzeichnet, daß -Ar- ein 1,4-Phenylenrest ist, der unsubstituiert oder durch eine Methylgruppe oder ein Chloratom substituiert ist.

7. Geformte Gebilde gemäß Anspruch 1 oder Verfahren gemäß Anspruch 2, dadurch gekennzeichnet, daß -Ar- ein unsubstituierter 1,4-Phenylenrest ist.

8. Geformte Gebilde gemäß Anspruch 1 oder Verfahren gemäß Anspruch 2, dadurch gekennzeichnet, daß R' eine direkte Bindung, ein Ethylen- oder Propylen(1,2)-Rest, -O-, -CO- oder ein Rest der Formel -O-Ar'-O- ist, worin Ar' Phenyl ist.

9. Geformte Gebilde gemäß Anspruch 1 oder Verfahren gemäß Anspruch 2, dadurch gekennzeichnet, daß -R Methyl, Methoxy oder Chlor ist.

10. Geformte Gebilde gemäß Anspruch 1 oder Verfahren gemäß Anspruch 2, dadurch gekennzeichnet, daß die m-Bindungen enthaltende Struktureinheit der zweiwertige Rest des 3,4'- oder 3',4-Diaminobenzanilids ist.

11. Geformte Gebilde gemäß mindestens einem der Ansprüche 1 oder 3 bis 10, dadurch gekennzeichnet, daß die Anteile der Diaminkomponenten B, C und D im Verhältnis zur Gesamtmenge an Diaminkomponenten innerhalb folgender Grenzen liegen:
Diamin B: 10-40 Mol-%
Diamin C: 10-40 Mol-%
Diamin D: 10,-50 Mol-%

## Claims

### Claims for the following Contracting States : AT, BE, CH, DE, DK, FR, GB, GR, IT, LI, LU, NL, SE

1. An aromatic copolyamide, soluble in organic, aprotic, polar solvents of the amide type, which contains at least 95 mol% of the repeating structural units of the formulae
A : -OC-Ar-CO-
B :

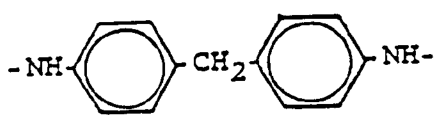

C :

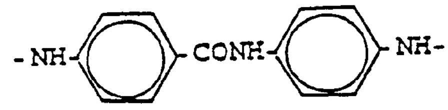

D :

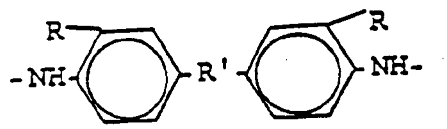

and up to 5 mol% of structural units E and/or F containing m-bonds and being derived from aromatic dicarboxylic acids (E') and/or from aromatic diamines (F'), the sums of the molar proportions of structural units A+E and the molar proportions of structural units B+C+D+F being essentially the same, in which
-Ar- is a divalent aromatic radical whose valence bonds are in the para or comparable coaxial or parallel position and which can be substituted by one or two inert radicals from the group comprising lower alkyl and halogen,
-R is hydrogen, lower alkyl radicals, lower alkoxy radicals or halogen,
R' is a direct bond, a polymethylene chain of 2 to 6 carbon atoms, which can be unsubstituted or substituted by alkyl or alkoxy groups of 1 to 4 carbon atoms, or is -O-, -S-, -CO- or $-SO_2-$, or a group of the formula -O-Ar'-O-, in which Ar' has the same meanings as Ar,
and the proportions of the diamine structural units B, C and D, relative to the total amount of these diamine structural units, are within the following limits:
structural unit B: 5-60 mol%,
structural unit C: 10-80 mol%,
structural unit D: 10-85 mol%.

**2.** A copolyamide as claimed in claim 1, wherein -Ar- is 1,4-phenylene, 1,4-, 1,5- or 2,6-naphthylene or 1,4-diphenylene.

**3.** A copolyamide as claimed in at least one of claims 1 and 2, wherein -Ar- is a 1,4-phenylene radical which is unsubstituted or substituted by a lower alkyl radical or a halogen atom.

**4.** A copolyamide as claimed in at least one of claims 1 to 3, wherein -Ar- is a 1,4-phenylene radical which is unsubstituted or substituted by a methyl group or a chlorine atom.

**5.** A copolyamide as claimed in at least one of claims 1 to 4, wherein -Ar- is an unsubstituted 1,4-phenylene radical.

**6.** A copolyamide as claimed in at least one of claims 1 to 5, wherein R' is a direct bond, an ethylene or 1,2-propylene radical, -O-, -CO- or a radical of the formula -O-Ar'-O-, in which Ar' is phenyl.

**7.** A copolyamide as claimed in at least one of claims 1 to 6, wherein -R is methyl, methoxy or chlorine.

**8.** A copolyamide as claimed in at least one of claims 1 to 7, wherein the structural unit containing m-bonds is the divalent radical of 3,4'- or 3',4-diaminobenzanilide.

**9.** A copolyamide as claimed in at least one of claims 1 to 8, wherein the proportions of the diamine components B, C and D, relative to the total amount of diamine components, are within the following limits:
diamine B: 10-40 mol%
diamine C: 10-40 mol%
diamine D: 10-50 mol%.

**10.** A process for the preparation of an aromatic copolyamide of claim 1 by polycondensation of a dicarbonyl chloride with aromatic diamines in a known organic, aprotic, polar solvent of the amide type, if desired in the presence of an alkali metal halide or alkaline earth metal halide at elevated temperature, which comprises reacting 95 to 100 mol% of acid chlorides of the formula

Cl-OC-Ar-CO-Cl (A')

and 0 to 5 mol% of aromatic dicarbonyl dichlorides (E') containing m-bonds with an equivalent amount of a diamine mixture composed of 95-100 mol% of a mixture of diamines comprising 5-60 mol% of diamines of the formula

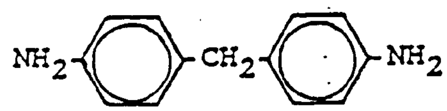

(B'),

10-85 mol% of diamines of the formula

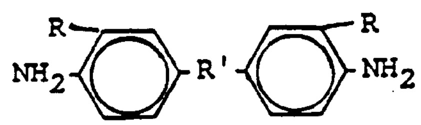

(D')

and 10-80 mol% of 4,4'-diaminobenzanilide (C') and 0 to 5 mol% of diamines (F') containing m-bonds.

**11.** The process as claimed in claim 10, wherein a mixture of diamines is reacted which has the following composition:
10-40 mol% of B',
10-40 mol% of C',
10-50 mol% of D'.

**12.** A shaped article from the group comprising filaments, fibers, fiber pulp, sheets and membranes made of aromatic copolyamides of the dicarboxylic acid/diamine type, wherein the shaped material is an aromatic copolyamide of claim 1.

**Claims for the following Contracting State : ES**

**1.** A shaped article from the group comprising filaments, fibers, fiber pulp, sheets and membranes made of aromatic copolyamides of the dicarboxylic acid/diamine type, wherein the shaped material is an aromatic copolyamide, soluble in organic, aprotic, polar solvents of the amide type, which contains at least 95 mol% of the repeating structural units of the formulae
A : -OC-Ar-CO-
B :

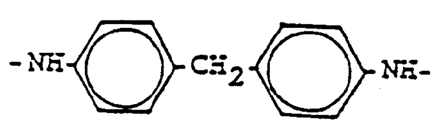

C :

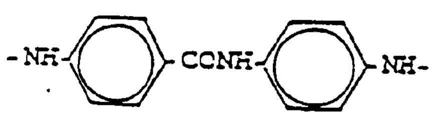

D :

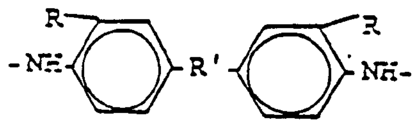

and up to 5 mol% of structural units E and/or F containing m-bonds and being derived from aromatic dicarboxylic acids (E') and/or from aromatic diamines (F'), the sums of the molar proportions of structural units A+E and the molar proportions of structural units B+C+D+F being essentially the same, in which
-Ar- is a divalent aromatic radical whose valence bonds are in the para or comparable coaxial or parallel position and which can be substituted by one or two inert radicals from the group comprising lower alkyl and halogen,
-R is hydrogen, lower alkyl radicals, lower alkoxy radicals or halogen,
R' is a direct bond, a polymethylene chain of 2 to 6 carbon atoms, which can be unsubstituted or substituted by alkyl or alkoxy groups of 1 to 4 carbon atoms, or is -O-, -S-, -CO- or $-SO_2-$, or a group of the formula -O-Ar'-O-, in which Ar' has the same meanings as Ar,
and the proportions of the diamine structural units B, C and D, relative to the total amount of these diamine structural units, are within the following limits:
structural unit B: 5-60 mol%,
structural unit C: 10-80 mol%,
structural unit D: 10-85 mol%.

2. A process for the preparation of an aromatic copolyamide of claim 1 by polycondensation of a dicarbonyl chloride with aromatic diamines in a known organic, aprotic, polar solvent of the amide type, if desired in the presence of an alkali metal halide or alkaline earth metal halide at elevated temperature, which comprises reacting 95 to 100 mol% of acid chlorides of the formula

Cl-OC-Ar-CO-Cl (A')

and 0 to 5 mol% of aromatic dicarbonyl dichlorides (E') containing m-bonds with an equivalent amount of a diamine mixture composed of 95-100 mol% of a mixture of diamines comprising 5-60 mol% of diamines of the formula

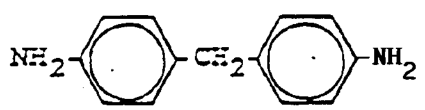 (B'),

10-85 mol% of diamines of the formula

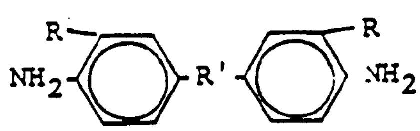 (D')

and 10-80 mol% of 4,4'-diaminobenzanilide (C') and 0 to 5 mol% of diamines (F') containing m-bonds.

3. The process as claimed in claim 2, wherein a mixture of diamines is reacted which has the following composition:
10-40 mol% of B',
10-40 mol% of C',
10-50 mol% of D'.

4. A shaped article as claimed in claim 1 or the process as claimed in claim 2, wherein -Ar- is 1,4-phenylene, 1,4-, 1,5- or 2,6-naphthylene or 1,4-diphenylene.

5. A shaped article as claimed in claim 1 or the process as claimed in claim and 2, wherein -Ar- is a 1,4-phenylene radical which is unsubstituted or substituted by a lower alkyl radical or a halogen atom.

**6.** A shaped article as claimed in claim 1 or the process as claimed in claim 2, wherein -Ar- is a 1,4-phenylene radical which is unsubstituted or substituted by a methyl group or a chlorine atom.

**7.** A shaped article as claimed in claim 1 or the process as claimed in claim 2, wherein -Ar- is an unsubstituted 1,4-phenylene radical.

**8.** A shaped article as claimed in claim 1 or the process as claimed in claim 2, wherein R' is a direct bond, an ethylene or 1,2-propylene radical, -O-, -CO- or a radical of the formula -O-Ar'-O-, in which Ar' is phenyl.

**9.** A shaped article as claimed in claim 1 or the process as claimed in claim 2, wherein -R is methyl, methoxy or chlorine.

**10.** A shaped article as claimed in claim 1 or the process as claimed in claim 2, wherein the structural unit containing m-bonds is the divalent radical of 3,4'- or 3',4-diaminobenzanilide.

**11.** A shaped article as claimed in claim 1 or the process as claimed in claim 2, wherein the proportions of the diamine components B, C and D, relative to the total amount of diamine components, are within the following limits:

| | |
|---|---|
| diamine B: | 10-40 mol% |
| diamine C: | 10-40 mol% |
| diamine D: | 10-50 mol%. |

**Revendications**

**Revendications pour les Etats contractants suivants : AT, BE, CH, DE, DK, FR, GB, GR, IT, LI, LU, NL, SE**

**1.** Copolyamide aromatique, soluble dans du solvant polaire aprotique du type amide, caractérisé en ce qu'il présente à au moins 95 moles % les motifs structurels répétés de formule :

A : - OC-Ar-CO-

B :

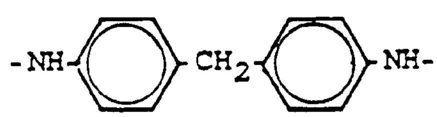

C :

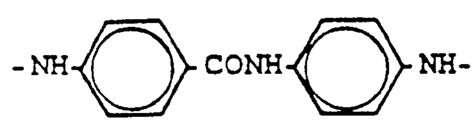

D :

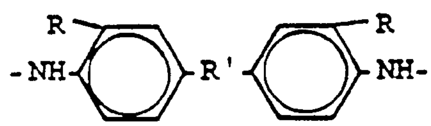

et à jusqu'à 5 moles % des motifs structurels E/ou F, contenant des liaisons m, dérivés d'acides dicarboxyliques aromatiques (E') et/ou de diamines aromatiques (F'), les sommes des proportions molaires des motifs structurels A+E et des proportions molaires des motifs structurels B+C+D+F étant essentiellement de même grandeur

-Ar représente un reste aromatique divalent dont les liaisons de valence sont en position para ou en position coaxiale comparable ou parallèle et qui peut être substitué par un ou deux restes inertes choisis parmi un reste alkyle inférieur et un reste halogéno,

-R représente un atome d'hydrogène, des restes alkyles inférieurs, des restes alcoxy inférieurs ou de l'halogène;

R' représente une liaison directe, une chaîne polyméthylène comportant 2 à 6 atomes de carbone, qui peut être non substituée ou substituée par des groupes alkyles ou alcoxy ayant 1 à 4 atomes de carbone, ou bien R' représente -O-, -S-, -CO- ou -$SO_2$-, ou un groupe de formule -O-Ar'-O-, où Ar' a les mêmes sens que Ar,

et les proportions des motifs structurels diamine B, C et D se situent, par rapport à la quantité totale de ces motifs structurels diamines, à l'intérieur des limites suivantes :

- Motif structurel B : 5 à 60 moles %
- Motif structurel C : 10 à 80 moles %
- Motif structurel D : 10 à 85 moles %.

2. Copolyamides selon la revendication 1, caractérisés en ce que -Ar- représente un groupe 1,4-phénylène, 1,4-, 1,5- ou 2,6-naphtylène ou 1,4-diphénylène.

3. Copolyamides selon au moins l'une des revendications 1 et 2, caractérisés en ce que -Ar- est un reste 1,4-phénylène, qui n'est pas substitué ou qui est substitué par un reste alkyle inférieur ou par un atome d'halogène.

4. Copolyamides selon au moins l'une des revendications 1 à 3, caractérisés en ce que -Ar- représente un reste 1,4-phénylène, qui n'est pas substitué ou qui est substitué par un groupe méthyle ou par un atome de chlore.

5. Copolyamides selon l'une au moins des revendications 1 à 4, caractérisés en ce que -Ar- est un reste 1,4-phénylène non substitué.

6. Copolyamides selon au moins l'une des revendications 1 à 5, caractérisés en ce que R' représente une liaison directe, un reste éthylène-ou propylène-(1,2), -O-, -CO- ou un reste de formule -O- Ar'-O-, dans laquelle Ar' représente un groupe phényle.

7. Copolyamides selon au moins l'une des revendications 1 à 6, caractérisés en ce que -R représente un reste méthyle, méthoxy ou chloro

8. Copolyamides selon au moins l'une des revendications 1 à 7, caractérisés en ce que le motif structurel contenant des liaisons m est le reste divalent du 3,4'- ou du 3',4-diaminobenzanilide.

9. Copolyamides selon au moins l'une des revendications 1 à 8, caractérisés en ce que les proportions des constituants diamine B, C et D par rapport à la quantité totale des constituants diamine se situent à l'intérieur des limites suivantes :

Diamine B : 10 à 40 moles %
Diamine C : 10 à 40 moles %
Diamine D : 10 à 50 moles %

10. Procédé pour préparer les copolyamides aromatiques selon la revendication 1, par polycondensation d'un chlorure d'acide dicarboxylique avec des diamines aromatiques dans un solvant organique aprotique polaire de type amide connu, éventuellement en présence d'un halogénure alcalin ou alcalino terreux, à température élevée, procédé caractérisé en ce qu'on fait réagir 95 à 100 moles % de chlorures d'acides de formule

Cl-OC-Ar-CO-Cl (A')

et 0 à 5 moles % de dichlorures d'acides dicarboxyliques aromatiques (E') contenant des liaisons m avec une quantité équivalente d'un mélange de diamines qui se compose de 95 à 100 moles % d'un mélange de diamines consistant en

5 à 60 moles % de diamines de formule

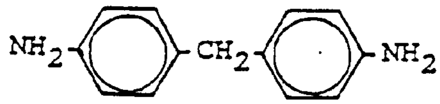 (B')

10 à 85 moles % de diamines de formule

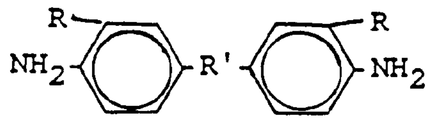 (D')

et 10 à 80 moles % du 4,4'-diamino-benzanilide (C'),
et de 0 à 5 moles % de diamines (F') contenant des liaisons m.

11. Procédé selon la revendication 10, caractérisé en ce qu'on fait réagir un mélange de diamines, qui présente la composition suivante :
    10 à 40 moles % de B',
    10 à 40 moles % de C',
    10 à 50 moles de D',

12. Objets façonnés choisis dans l'ensemble formé par des fils, des fibres, de la pâte de fibre, des feuilles et membranes en des copolyamides aromatiques du type diamine acide dicarboxylique, caractérisés en ce que la matière conformée ou façonnée est un copolyamide aromatique selon la revendication 1.

**Revendications pour l'Etat contractant suivant : ES**

1. Objets conformés ou façonnés choisis dans l'ensemble consistant en des fils, des fibres, de la pâte de fibres, des feuilles et membranes en des copolyamides aromatiques de type acide dicarboxylique-diamine (diamide d'acide dicarboxylique), objets caractérisés en ce que la matière conformée est un copolyamide soluble dans des solvants aprotiques polaires du type amide, ce copolyamide présentant, pour au moins 95 moles %, les motifs structuels répétés de formule :
   A : -OC-Ar-CO-
   B :

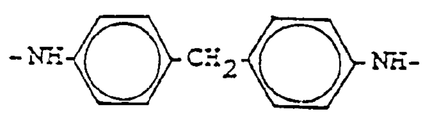

C :

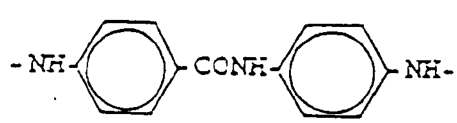

D :

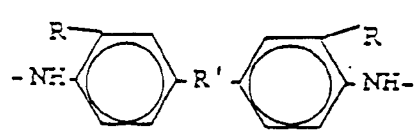

et pour jusqu'à 5 moles % des motifs structurels E/ou F, contenant des liaisons m-, dérivés d'acides dicarboxyliques aromatiques (E') et/ou de diamines aromatiques (F'), les sommes des proportions molaires des motifs structurels A+E et des proportions molaires des motifs structurels B+C+D+F étant essentiellement de même grandeur

-Ar représente un reste aromatique divalent dont les liaisons de valence sont en position para ou en position coaxiale comparable ou parallèle et qui peut être substitué par un ou deux restes inertes choisis parmi un reste alkyle inférieur et un reste halogéno,

-R représente un atome d'hydrogène, des restes alkyles inférieurs, des restes alcoxy inférieurs ou de l'halogène;

R' représente une liaison directe, une chaîne polyméthylène comportant 2 à 6 atomes de carbone, qui peut être non substituée ou substituée par des groupes alkyles ou alcoxy ayant 1 à 4 atomes de carbone, ou R' représente -O-, -S-, -CO- ou $-SO_2-$, ou un groupe de formule -O-Ar'-O-, où Ar' a les mêmes sens que Ar,

et les proportions des motifs structurels diamine B, C et D se situent, par rapport à la quantité totale de ces motifs structurels diamines, à l'intérieur des limites suivantes :

- Motif structurel B : 5 à 60 moles %
- Motif structurel C : 10 à 80 moles %
- Motif structurel D : 10 à 85 moles %.

**2.** Procédé pour préparer les copolyamides aromatiques selon la revendication 1, par polycondensation d'un chlorure d'acide dicarboxylique avec des diamines aromatiques dans un solvant organique aprotique polaire de type amide connu, éventuellement en présence d'un halogénure alcalin ou alcalino terreux, à température élevée, procédé caractérisé en ce qu'on fait réagir 95 à 100 moles % de chlorures d'acides de formule

Cl-OC-Ar-CO-Cl (A')

et 0 à 5 moles % de dichlorures d'acides dicarboxyliques aromatiques (E') contenant des liaisons m- avec une quantité équivalente d'un mélange de diamines qui se compose de 95 à 100 moles % d'un mélange de diamines consistant en 5 à 60 moles % de diamines de formule

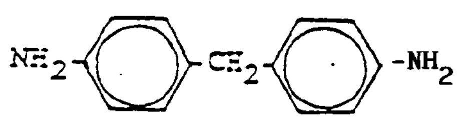

(B')

10 à 85 moles % de diamines de formule

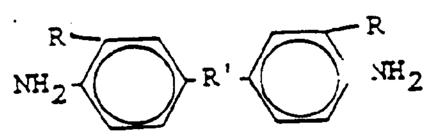

(D')

et 10 à 80 moles % du 4,4'-diamino-benzanilide (C'),
et de 0 à 5 moles % de diamines (F') contenant des liaisons m-.

**3.** Procédé selon la revendication 2, caractérisé en ce qu'on fait réagir un mélange de diamines présentant la composition suivante :

10 à 40 moles % de B',
10 à 40 moles % de C',
10 à 50 moles % de D'.

**4.** Objets conformés selon la revendication 1 ou procédé selon la revendication 2, caractérisé(s) en ce que -Ar- représente le groupe 1,4-phénylène 1,4-, 1,5- ou 2,6-naphtylène ou 1,4-phénylène.

**5.** Objets conformés selon la revendication 1 ou procédé selon la revendication 2, caractérisé(s) en ce que -Ar représente un reste 1,4-phénylène, qui n'est pas substitué ou est substitué par un reste alkyle inférieur ou par un atome d'halogène.

**6.** Objets conformés selon la revendication 1 ou procédé selon la revendication 2, caractérisé(s) en ce que

-Ar- est un reste 1,4-phénylène, qui n'est pas substitué ou qui est substitué par un groupe méthyle ou par un atome de chlore.

**7.** Objets conformés selon la revendication 1 ou procédé selon la revendication 2, caractérisé(s) en ce que -Ar- est un reste 1,4-phénylène non substitué.

**8.** Objets conformés selon la revendication 1 ou procédé selon la revendication 2, caractérisé(s) en ce que R' représente une liaison directe, un reste éthylène ou propylène-(1,2), -O-, -CO- ou un reste de formule -O-Ar'-O-, dans laquelle le groupe phényle.

**9.** Objets conformés selon la revendication 1 ou procédé selon la revendication 2, caractérisé(s) en ce que -R représente un groupe méthyle ou méthoxy ou un atome de chlore.

**10.** Objets conformés selon la revendication 1 ou procédé selon la revendication 2, caractérisé(s) en ce que le motif structurel contenant des liaisons m- est le reste divalent du 3,4' - ou du 3',4-diaminobenzanilide.

**11.** Objets conformés selon l'une au moins des revendications 1 ou 3 à 10, caractérisés en ce que les proportions des constituants diamines B, C et D par rapport à la quantité totale des constituants diamines se situent à l'intérieur des limites suivantes :

Diamine B : 10 à 40 moles %
Diamine C : 10 à 40 moles %
Diamine D : 10 à 50 moles %